# EUROPÄISCHE PATENTSCHRIFT

(11) **EP 3 962 761 B1**
(45) Veröffentlichungstag und Bekanntmachung des Hinweises auf die Patenterteilung: **25.10.2023**
(21) Anmeldenummer: 20720438.9
(22) Anmeldetag: 20.04.2020
(51) Int. Cl.: B60G 17/016, B60G 17/017, G01G 19/08

(54) **VERFAHREN ZUR ERMITTLUNG EINER ACHSLAST AN EINEM MECHANISCH GEFEDERTEN FAHRZEUG**
METHOD FOR DETERMINING AN AXLE LOAD ON A MECHANICALLY SUSPENDED VEHICLE
PROCÉDÉ DE DÉTERMINATION D'UNE CHARGE D'ESSIEU SUR UN VÉHICULE À SUSPENSION MÉCANIQUE

(30) Priorität: 30.04.2019 DE 102019111187
(43) Veröffentlichungstag der Anmeldung: 09.03.2022
(73) Patentinhaber: ZF CV Systems Europe BV, 1170 Brussels (BE)
(72) Erfinder: LUCAS, Johann, 31319 Sehnde (DE); THIMM, Andreas, 31157 Sarstedt (DE); JERMIS, Sebastian, 30171 Hannover (DE); WARNECKE, Britta, 30890 Barsinghausen (DE)
(74) Vertreter: Ohlendorf, Henrike
(86) Internationale Anmeldenummer: PCT/EP2020/060981
(87) Internationale Veröffentlichungsnummer: WO 2020/221613

(56) Entgegenhaltungen:
- EP-A1- 3 466 754
- EP-B1- 3 020 266
- DE-A1- 10 029 332
- DE-A1- 10 053 603
- DE-A1-102004 010 559
- DE-A1-102005 008 970
- DE-A1-102016 004 721
- DE-A1-102017 009 146
- DE-A1-102017 011 753
- DE-A1-102018 132 697
- JP-A- H05 231 913
- JP-A- H06 221 902
- JP-A- H08 128 884
- JP-A- H08 207 544
- US-A1- 2015 204 715
- US-A1- 2016 305 814
- US-B1- 6 363 331

## Beschreibung

Die Erfindung betrifft ein Verfahren zur Ermittlung einer Achslast an einem mechanisch gefederten Fahrzeug mittels einer Wegmesseinrichtung, einer elektronischen Steuereinheit und eines in der Steuereinheit abgespeicherten Algorithmus.

Die Ermittlung der Achslast an einem Fahrzeug, also die sich aus der Summe von Eigengewicht und Ladungsgewicht ergebende Gewichtskraft, welche auf einer Fahrzeugachse lastet, dient der Anzeige und Überwachung von dessen Beladungszustand. Dadurch sollen sicherheitsgefährdende Überladungen sowie ungünstige Gewichtsverteilungen am Fahrzeug vermieden werden. In Nutzfahrzeugen ist der Einbau von Überlastanzeigen bereits obligatorisch oder wird dies zukünftig sein. Demnach soll zukünftig das Gesamtgewicht eines Fahrzeugs mit einer Auflösung von 100 kg oder besser und bei einer Beladung des Fahrzeugs von mehr als 90% des zulässigen Gesamtgewichts mit einer Genauigkeit von mindestens ±5% erfasst werden. Außerdem soll ein erster Gewichtswert spätestens 15 Minuten nach dem Start des Fahrzeugs verfügbar sein und danach alle 10 Minuten oder schneller neu berechnet werden. Das Wiegen des Fahrzeugs auf einer stationären externen Achslastwaage wird somit zukünftig nicht ausreichen, um die zugehörigen Rechtsvorschriften zu erfüllen. Daher besteht ein zunehmender Bedarf an einfachen und kostengünstigen fahrzeugseitigen, also im Fahrzeug eingebauten Gewichtserfassungssystemen.

Bereits bekannt sind sogenannte On-Board-Wiegesysteme, wie beispielsweise das Air-Weigh^{™}-System, welches in Fahrzeuge mit Stahlfederung, mit Luftfederung oder mit gemischter Federung eingebaut und betrieben werden kann. Nachteilig daran ist, dass derartige Vorrichtungen relativ kostenaufwendige separate Einbausysteme sind, mit denen ein Nutzfahrzeug zwar ausgestattet werden kann, die allerdings ausschließlich zur Ermittlung der Achslast ausgebildet sind, und insbesondere nicht in eine elektronische Niveauregulierungseinrichtung integriert werden können. Für die Niveauregelung und für die Achslastermittlung sind dann zwei separate Systeme erforderlich.

Eine bekannte elektronisch geregelte Luftfederungsanlage zur Niveaureglung in Fahrzeugen ist das in der Firmenschrift der WABCO GmbH "ECAS im Motorwagen", 2. Ausgabe, 2007, beschriebene und seit langem in Nutzfahrzeugen wie Lastkraftwagen, Bussen und Anhängefahrzeugen oder auch in Personenkraftwagen eingesetzte ECAS-System (Electronically Controlled Air Suspension). Eine derartige elektronisch geregelte Luftfederungsanlage zur Niveaureglung besteht im Wesentlichen aus mehreren verstellbaren, als Tragbälge ausgebildeten Luftfederelementen, einer elektronischen Steuereinheit, die in ein Datenbussystem (CAN) eingebunden sein kann, einer Wegmesseinrichtung zur Erfassung von Weggrößen für eine Niveaubestimmung am Fahrzeug, einer Steuerventileinrichtung zur Betätigung der Luftfederelemente sowie einer Bedieneinheit für den Benutzer.

Eine elektronisch geregelte Niveauregelung ermöglicht es, das Fahrzeugniveau, also den Abstand des Fahrzeugaufbaus von den Fahrzeugachsen und damit die Höhe des Fahrzeugaufbaus über der Fahrbahn, in bestimmten Situationen gezielt anzuheben, abzusenken oder auf gleichem Niveau zu halten. Beispielsweise kann damit die Bodenfreiheit an den Untergrund angepasst, die Aerodynamik verbessert oder der Kraftstoffverbrauch optimiert werden. In Nutzfahrzeugen werden Niveauregulierungseinrichtungen verwendet, um bei unterschiedlichem Ladegewicht ein gleichbleibendes Niveau zu halten sowie das Beladen und Entladen zu erleichtern. Außerdem können bei luftgefederten Nutzfahrzeugen häufig eine oder mehrere Hilfsachsen durch Entlüften der Tragbälge bei gleichzeitigem Belüften von dafür vorgesehenen Liftbälgen aus einer Fahrstellung vom Boden angehoben werden, um das Ladegewicht in einem variablen Lastverhältnis auf die Fahrzeugachsen zu verteilen, den Reifenverschleiß sowie den Kraftstoffverbrauch zu verringern und das Fahrverhalten sowie die Wendigkeit des Fahrzeugs zu verbessern.

Das bekannte ECAS-System weist bereits erweiterte Funktionen auf oder ermöglicht es zumindest, außer der Niveauregelung des Fahrzeugaufbaus auch die Achslast an den Fahrzeugachsen zu ermitteln. Aus der nicht vorveröffentlichten DE 10 2017 011 753 A1 ist ein Verfahren zur fahrzeugseitigen Ermittlung einer Achslast an einem mechanisch und/oder pneumatisch/hydraulisch gefederten Fahrzeug mit einem ECAS-System bekannt. Die Achslastermittlung an einer mechanisch gefederten Fahrzeugachse erfolgt bei diesem bekannten Verfahren mittels einer Wegmesseinrichtung. Die Achslastermittlung an einer pneumatisch/hydraulisch gefederten Fahrzeugachse erfolgt mittels einer Druckmesseinrichtung.

Die DE 10 2017 009 146 A1 beschreibt ein Verfahren zur Achslastbestimmung an luftgefederten Achsen eines Fahrzeugs, mit einem Luftfederungssystem, bei dem der Druck, die Dehnung und die Bewegungsrichtung eines Luftfederelements gemessen und ausgewertet werden. Dabei wird berücksichtigt, dass die Beziehung zwischen Druck und Achslast eine Hysterese aufweist, da diese Beziehung in Abhängigkeit von der Bewegungsrichtung des Luftfederelements vor der Achslastbestimmung variiert, also ob das Luftfederelement unmittelbar vor der Achslastbestimmung aufgeblasen und gedehnt oder entleert und zusammengezogen wurde. Die Hysterese entsteht aufgrund von Reibungseffekten beim Entfalten und Zusammenfalten der Faltenbalggummis der Luftfederelemente und wirkt sich so aus, dass die Luftfederelemente auf der gleichen Fahrgestellhöhe eine größere Kraft ausüben, wenn das Fahrgestell zuvor angehoben wurde, als wenn das Fahrzeug zuvor abgesenkt wurde. Eine Steuereinheit des Luftfederungssystems verwendet je nach Bewegungsrichtung zur Achslastbestimmung zwei verschiedene dreidimensionale Kennfelder mit Last-Druck-Dehnungs-Beziehungen, um eine genauere Achslastbestimmung zu erreichen, wobei allerdings unmittelbar vor jeder Achslastbestimmung zunächst die vorherige Bewegungsrichtung des Luftfederelements bestimmt werden muss.

An mechanisch gefederten Fahrzeugachsen werden für die Achslastermittlung üblicherweise Wegmesseinrichtungen genutzt, welche häufig als Höhensensoren bezeichnet werden. Die Achslastermittlung beruht dabei auf der Messung eines Federwegs eines Federelements, durch das eine Fahrzeugachse oder einzelne Fahrzeugräder mit einem Fahrzeugaufbau federnd gekoppelt sind. Der Wegsensor befindet sich dabei in der Regel am Fahrzeugaufbau in der Nähe derjenigen Fahrzeugachse, deren Achslast gemessen werden soll. Bei einem häufig eingesetzten Sensortyp ist der Wegsensor über einen Hebel mit der betreffenden Achse verbunden, wobei mittels des als Drehwinkelsensor ausgebildeten Wegsensors eine Drehbewegung des Hebels erfasst und daraus auf eine Achslast geschlossen werden kann. Eine derartige Messeinrichtung zur Messung einer Achslast an einem Fahrzeug beschreibt beispielsweise die DE 10 2016 004 721 A1.

Allerdings ist bei einer Stahlfederung in Form von Blattfedern das Verhältnis der Höhenänderung zur aufgebrachten Last aufgrund von Reibungseffekten kein einfacher Zusammenhang, sondern eine Hysteresefunktion. Zudem treten erfahrungsgemäß beim Beladen und Entladen des Fahrzeuges häufig Verspannungen in den mechanischen Federelementen auf, die sich im Fahrzeugstillstand nicht ohne weiteres lösen und dadurch zu einer falschen Achslastanzeige führen können. Mit einer einzelnen Niveaumessung kann daher mit guter Genauigkeit nur eine Überladung des Fahrzeugs erkannt werden. Eine Achslastanzeige über den gesamten Lastbereich, insbesondere im niedrigen Lastbereich, wenn das Fahrzeug also nur wenig beladen ist, sowie eine Achslastanzeige unmittelbar nach dem Beladen oder Entladen ist jedoch relativ ungenau. Zukünftige Anforderungen, nämlich das Gesamtgewicht des Fahrzeugs mit einer Auflösung von 100 kg oder besser sowie bei einer Beladung von mehr als 90% des zulässigen Gesamtgewichts mit einer Genauigkeit von mindestens ±5% zu erfassen, erfordern daher bei der Achslastbestimmung an solchen mechanisch gefederten Fahrzeugachsen mittels Wegsensoren eine Weiterentwicklung.

Die JP H08 128 884 A offenbart ein Verfahren zum Ermitteln einer Achslast eines Fahrzeugs, wobei ein Einfederungswegsensor einen Einfederungsweg einer Blattfeder an einer Achse eines Fahrzeugs ermittelt, wenn sich das Fahrzeug in Fahrt befindet, und ein Steuerkreis basierend auf einem Signal des Einfederungswegsensors die Achslast ermittelt. Dabei wird eine Hysterese berücksichtigt, die bewirkt, dass bei gleicher Achslast ein unterschiedlicher Einfederungsweg gemessen werden kann, abhängig davon, ob die Achslast steigt oder sinkt.

Die JP H08 207 544 A offenbart eine Vorrichtung für ein Fahrzeug, die einen Lastsensor zum Ermitteln eines Einfederungswegs einer Blattfeder an einer Antriebsachse des Fahrzeugs und an einer angetriebenen Achse des Fahrzeugs und einen Fahrzeuggeschwindigkeitssensor aufweist. Wenn sich eine Fahrzeuggeschwindigkeit in einem vorbestimmten Geschwindigkeitsbereich unterhalb einer Grenzgeschwindigkeit befindet, wird automatisch ein von der Antriebsachse getragener Lastanteil erhöht, um eine Reibung von Rädern der Antriebsachse am Untergrund zu erhöhen.

Die US 2015/0204715 A1 und US 2016/0305814 A1 offenbaren Verfahren zum Abschätzen eines Gewichts eines Fahrzeugs unter Einsatz einer Kamera, mittels derer photographische Aufnahmen eines Rades des Fahrzeugs gemacht werden.

Die US 6 363 331 B1 offenbart ein Verfahren zum Überwachen charakteristischer Werte von Achsen eines Fahrzeugs, um eine Gewichtsverteilung des Fahrzeugs zu überwachen. Dabei wird ein gleitender Durchschnitt eines Gewichts einer Achse ermittelt.

Vor diesem Hintergrund lag der Erfindung die Aufgabe zugrunde, ein Verfahren zur Achslastermittlung an mechanisch gefederten Fahrzeugen vorzustellen, welches die beschriebenen Nachteile hinsichtlich der Genauigkeit und Zuverlässigkeit der Achslastermittlung nicht aufweist. Vorzugsweise soll dieses Verfahren für den Einsatz in einem Steuergerät einer Niveauregulierungseinrichtung eines Nutzfahrzeugs geeignet sein.

Die Lösung dieser Aufgabe ergibt sich aus den Merkmalen des unabhängigen Anspruchs, während vorteilhafte Ausgestaltungen und Weiterbildungen der Erfindung den Unteransprüchen entnehmbar sind.

Der Erfindung lag die Erkenntnis zugrunde, dass ein System zur Achslastermittlung an hydraulisch oder pneumatisch gefederten Achsen eines Fahrzeugs mit vergleichsweise geringem Datenerfassungs- und Datenverarbeitungsaufwand dahingehend angepasst werden kann, dass auch an mechanisch gefederten Fahrzeugachsen eine genaue sowie zuverlässigere Achslastmessung durchgeführt werden kann. Außerdem kann ein bestehendes System zur Niveauregelung und zur Achslastmessung an gemischt gefederten Fahrzeugen weiter verbessert und an zukünftige Anforderungen angepasst werden.

Die Erfindung geht daher aus von einem Verfahren zur Ermittlung einer Achslast an einem mechanisch gefederten Fahrzeug mittels einer Wegmesseinrichtung, einer elektronischen Steuereinheit und eines in der Steuereinheit abgespeicherten Algorithmus.

Zur Lösung der gestellten Aufgabe sieht die Erfindung vor, dass vorab an einer mechanisch gefederten Fahrzeugachse eine Testroutine durchgeführt wird, bei der ein Niveausignal einer an der Fahrzeugachse angeordneten Wegmesseinrichtung erfasst und ausgewertet wird. Dazu wird bei einem Ladevorgang des Fahrzeugs aus einer Mehrzahl von Messwerten eine Beladungskurve ermittelt, welche das mit der Wegmesseinrichtung gemessene Niveau oder eine mit dem Niveau korrelierte andere Messgröße in Abhängigkeit von zunehmender Achslast angibt. Weiter wird bei einem Entladevorgang des Fahrzeugs aus einer Mehrzahl von Messwerten eine Entladungskurve ermittelt, welche das mit der Wegmesseinrichtung gemessene Niveau oder eine mit dem Niveau korrelierte andere Messgröße in Abhängigkeit von abnehmender Achslast angibt. Aus der Beladungskurve und der Entladungskurve wird eine gemittelte Last-Weg-Kennlinie errechnet, deren Werte in einem nichtflüchtigen Speicher der Steuereinheit abgespeichert werden. Nach jedem Start des Fahrzeugs wird nach Überschreiten einer vorgegebenen unteren Fahrgeschwindigkeitsgrenze eine sich während der Fahrt zyklisch wiederholende Achslastermittlungsroutine durchgeführt, bei der jeweils während einer vorgegebenen Zeitspanne fortlaufend Achslastwerte mit der gemittelten Last-Weg-Kennlinie ermittelt werden. Aus den während dieser Zeitspanne ermittelten Achslastwerten wird ein arithmetischer Achslastmittelwert errechnet und dieser Achslastmittelwert als aktueller Achslastwert angezeigt. Dieser Achslastwert wird bis zum Überschreiben durch einen neuen Achslastwert beibehalten.

Unter einer Achslast wird eine sich aus der Summe von Eigengewicht und Ladungsgewicht ergebende Gewichtskraft verstanden, welche auf einer Fahrzeugachse lastet. Aus der Summe der Achslasten aller Fahrzeugachsen ergibt sich das Gesamtgewicht des Fahrzeugs.

Unter dem verwendeten Begriff einer mechanischen Federung wird üblicherweise eine Stahlfederung verstanden, beispielsweise in Form einer Blattfeder. Grundsätzlich kann eine mechanische Federung anstelle von Stahlfedern Federn aus anderen Materialen, wie anderen Legierungen oder Verbundwerkstoffen aufweisen. Wenn hier von stahlgefederten Achsen die Rede ist, soll dies keine Einschränkung der Erfindung auf mechanische Federn aus diesem Material beinhalten. Wenn von luftgefederten Fahrzeugachsen die Rede ist, kann entsprechendes auf hydraulisch gefederte Achsen übertragen werden. Unter einer pneumatisch/hydraulischen Federung wird eine Federung verstanden, die entweder auf Luftfedern (pneumatisch) oder auf Flüssigkeitsfedern (hydraulisch) beruhen kann.

Unter einem Niveau oder einem Fahrzeugniveau oder einer Höhe wird hier der Abstand eines Fahrzeugaufbaus eines Fahrzeugs von einer Fahrzeugachse verstanden.

Unter einer Wegmesseinrichtung wird eine Anordnung zur Messung des Niveaus an einer Fahrzeugachse verstanden, welche mindestens einen Wegsensor aufweist. Die Begriffe Wegmesseinrichtung, Wegsensor und Höhensensor werden gleichbedeutend verwendet.

Unter einer Last-Weg-Kennlinie wird der Zusammenhang zwischen einem von einer Wegmesseinrichtung gemessenem Niveau oder einer mit dem Niveau korrelierten andere Messgröße und einer Achslast verstanden. Durch eine Last-Weg-Kennlinie kann beispielsweise ein Zusammenhang zwischen einem Niveau und einer Achslast oder der Zusammenhang zwischen einem Federweg eines Federelements und einer Achslast oder ein Zusammenhang zwischen einer Auslenkung eines Wegsensors und einer Achslast dargestellt sein.

Die Bezeichnung "ECAS" steht, wie eingangs bereits erwähnt, als Abkürzung für eine elektronisch geregelte Luftfederungseinrichtung (Electronically Controlled Air Suspension).

Durch das Verfahren gemäß der Erfindung wird eine genaue und zuverlässige Achslastermittlung an mechanisch gefederten Fahrzeugachsen mittels eines Wegsensors erreicht. Demnach werden zunächst die Messwerte eines Last-Weg-Diagramms an einer Fahrzeugachse während des Beladens und Entladens eines Fahrzeugs ermittelt. Dies kann beispielsweise mithilfe einer Achslastwaage erfolgen. Dafür wird schrittweise die Achslast solange erhöht, bis die maximal zulässige Achslast für die Fahrzeugachse erreicht ist. Dabei wird jeweils die Einfederung mit dem Wegsensor gemessen. Aus den Messwerten wird die Beladungskurve ermittelt. Anschließend wird die Achslast wieder verringert und die Ausfederung gemessen, bis das Fahrzeug vollständig entladen ist. Aus diesen Messwerten wird die Entladungskurve ermittelt. Aufgrund der reibungsbedingten Widerstandskraft in den Federelementen der Fahrzeugachse, welche bei einer Laständerung der Einfederung beziehungsweise der Ausfederung der Federelemente entgegenwirkt, ergibt sich eine Differenz zwischen der gemessenen Achslast und der tatsächlichen Achslast in jeder der beiden Kurven. Die Beladungskurve und die Entladungskurve beschreiben daher eine Hysterese im Last-Weg-Diagramm der Fahrzeugachse. Ein Algorithmus in der Steuereinheit errechnet gemäß der Erfindung aus den beiden Kurven eine gemittelte Last-Weg-Kennlinie. In dieser idealisierten Last-Weg-Kennlinie ist die Hysterese rechnerisch eliminiert. Die gemittelte Last-Weg-Kennlinie wird von einer Achslastermittlungsroutine dann verwendet.

Eine einzelne Achslastermittlung im Fahrzeugstillstand nach einer Laständerung mittels der zuvor aufgenommenen Last-Weg-Kennlinie kann allerdings dennoch mit einer relativen Ungenauigkeit behaftet sein, wenn man davon ausgeht, dass in den einzelnen Federelementen der Stahlfederung der Fahrzeugachse Verspannungen auftreten, die im Fahrzeugstillstand festsitzen. Dadurch misst der Höhensensor eine Einfederungshöhe, welche nicht der tatsächlichen Achslast entspricht und die Achslastanzeige verfälscht.

Diese Messunsicherheit wird gemäß der Erfindung mithilfe einer Achslastermittlungsroutine beseitigt. Sobald das Fahrzeug fährt und eine untere Fahrgeschwindigkeitsgrenze überschreitet, beginnt der Algorithmus mit der Berechnung. Beim Überschreiten der Geschwindigkeitsgrenze wird davon ausgegangen, dass sich die Verspannungen in den Federelementen lösen oder schon gelöst haben. Während der Fahrt würde sich somit bereits mit einer Einzelmessung des Höhensensors aus dem aktuellen Wert des Niveausignals mit der gemittelten Last-Weg-Kennlinie ein relativ genauer Achslastwert ergeben.

Die Genauigkeit wird weiter erhöht, indem über eine Zeitspanne während der Fahrt, beispielsweise über 10 Minuten, ein arithmetischer Mittelwert aus den fortlaufend errechneten Achslastwerten gebildet wird. Dieser Mittelwert gibt die tatsächliche Achslast mit sehr hoher Genauigkeit an. Der Zyklus kann nun wiederholt durchlaufen werden. Während dieser Zeit bleibt der jeweils aktuelle Achslastwert erhalten und wird nach dem nächsten Durchlauf des Zyklus durch den neuen Achslastwert überschrieben. Auf diese Weise steht während der Fahrt des Fahrzeugs stets ein sehr genauer aktueller Achslastwert zur Verfügung.

Achslastwerte, welche bei einer Kurvenfahrt oder bei einem anderen Querbeschleunigungen des Fahrzeugaufbaus verursachenden Fahrmanöver ermittelt werden, bleiben erfindungsmäß bei der Berechnung des Achslastmittelwerts unberücksichtigt

Zur sicheren Erkennung einer Kurvenfahrt oder eines anderen Querbeschleunigungen des Fahrzeugaufbaus verursachenden Fahrmanövers des Fahrzeugs wird erfindungsgemäß
mittels eines Querbeschleunigungssensors fortlaufend ein Querbeschleunigungssignal erfasst und ausgewertet, wobei auf eine Kurvenfahrt oder ein gleichwirkendes Fahrmanöver des Fahrzeugs geschlossen wird, wenn der Betrag des Querbeschleunigungssignals einen vorgegebenen Querbeschleunigungsgrenzwert überschreitet. Ein diesbezüglicher Wert, welcher auf eine Kurvenfahrt oder eine andersartig verursachte Querbeschleunigung des Fahrzeugs schließen lässt, kann auch mittels eines Vergleichs der zeitlichen Veränderung von Drehzahlen der Räder einer oder mehrerer Fahrzeugachsen ermittelt werden.

Gemäß einer anderen Weiterbildung des Verfahrens kann vorgesehen sein, dass im Fahrzeugstillstand die Achslastermittlungsroutine neu gestartet wird, wenn eine Achslaständerung erkannt wird, welche einen vorgegebenen Achslaständerungsgrenzwert überschreitet. Demnach kann der Algorithmus so eingestellt sein, dass sobald das Fahrzeug zum Stillstand kommt und eine signifikante Laständerung, beispielsweise von mehr als 10%, erkannt wird, die Achslastermittlungsroutine von neuem gestartet wird. Dadurch stehen auch im Fahrzeugstillstand aktuelle Achslastwerte zur Verfügung, deren Genauigkeit mindestens ausreicht, um eine Überladung des Fahrzeugs sicher zu erkennen.

Gemäß einer Ausführungsform der Erfindung kann vorgesehen sein, dass die Testroutine zur Errechnung einer gemittelten Last-Weg-Kennlinie durch einen Bediener mithilfe von Eingabe- und Anzeigemitteln manuell durchgeführt sowie nach einer angezeigten Aufforderung in vorgebbaren zeitlichen und/oder betriebsstundenabhängigen Abständen wiederholt werden kann.

Es ist vorteilhaft, wenn die Testroutine in bestimmten Zeitabständen wiederholt sowie zusätzlich bedarfsweise durchgeführt wird. Die Last-Weg-Kennlinie kann dadurch an Änderungen der Hysterese aufgrund der Alterung von Federelementen oder nach einer Reparatur an der Federung angepasst werden. Dadurch können die Genauigkeit und die Zuverlässigkeit der ermittelten Achslastwerte erhöht werden. Zumindest sollte die Testroutine nach jedem Austausch von Komponenten der mechanischen Federung durchgeführt werden. Dadurch ist eine einwandfreie Betriebsbereitschaft des Systems gewährleistet.

Gemäß einer anderen Weiterbildung der Erfindung kann vorgesehen sein, dass die Testroutine zur Ermittlung einer gemittelten Last-Weg-Kennlinie für jede mechanisch gefederte Fahrzeugachse des Fahrzeugs individuell durchgeführt wird. Demnach kann der Achslastermittlungsroutine für jede mechanisch gefederte Fahrzeugachse eine individuelle Last-Weg-Kennlinie zur Verfügung gestellt werden. Dadurch kann die Genauigkeit der ermittelten Achslastwerte weiter erhöht werden. Grundsätzlich ist es jedoch auch möglich, mit geringen Genauigkeitseinbußen eine einzige Last-Weg-Kennlinie für alle mechanisch gefederten Fahrzeugachsen zu verwenden, wenn für jede Fahrzeugachse baugleiche Komponenten für die Federung verbaut sind.

Gemäß einer anderen Ausführungsform der Erfindung kann vorgesehen sein, dass die Achslastermittlungsroutine zur Ermittlung der Achslast für jede mechanisch gefederte Fahrzeugachse des Fahrzeugs, welche mit einer ein Niveausignal erzeugenden Wegmesseinrichtung ausgestattet ist, individuell durchgeführt wird. Es ist demnach vorteilhaft, das Verfahren an jeder mechanisch gefederten Fahrzeugachse durchzuführen und die Achslast individuell anzuzeigen. Dadurch kann sichergestellt werden, dass die zulässige Achslast an jeder Fahrzeugachse eingehalten wird. Der Fahrer kann erkennen, wenn es, beispielweise aufgrund einer unzureichenden Ladungssicherung, zu einer Verlagerung der Ladung während der Fahrt kommt und erforderlichenfalls darauf reagieren. Dadurch wird die Betriebssicherheit weiter erhöht.

Ein erfindungsgemäßes Verfahren kann in ein System, wie beispielsweise ECAS, zur Ermittlung einer Achslast an einem mechanisch und pneumatisch/hydraulisch gemischt gefederten Fahrzeug integriert werden. Hierbei wird die Achslast mithilfe eines in einer elektronischen Steuereinheit einer elektronisch geregelten Niveauregulierungseinrichtung des Fahrzeugs abgespeicherten Algorithmus ermittelt. Dafür sind die für eine Niveauregelung vorgesehene Steuer- und Sensormittel in dem Fahrzeug derart installiert und/oder funktional erweitert, dass zusätzlich zu einer Niveauregelung Funktionen zur Achslastermittlung an mechanisch gefederten Fahrzeugachsen sowie zur Achslastermittlung an pneumatisch/hydraulisch gefederten Fahrzeugachsen verfügbar sind. Bei diesem System erfolgen die Achslastermittlung an einer mechanisch gefederten Fahrzeugachse mittels einer Wegmesseinrichtung und die Achslastermittlung an einer pneumatisch/hydraulisch gefederten Fahrzeugachse mittels einer Druckmesseinrichtung.

Damit Fehlfunktionen vermieden werden, kann bei der Achslastermittlung bei Fahrzeugen mit gemischter Federung eine Plausibilitätsprüfung durchgeführt werden, um mechanisch gefederte Achsen von pneumatisch gefederten Achsen zu unterscheiden. Dazu kann beispielsweise das Vorhandensein von Tragbälgen, Drucksensoren und diesen zugeordneten Ventileirichtungen an vorhandenen luftgefederten Fahrzeugachsen verifiziert werden.

Schließlich sei erwähnt, dass das Verfahren gemäß der Erfindung über eine Achslastermittlung an mechanisch gefederten Fahrzeugachsen hinaus grundsätzlich auch an luftgefederten Achsen durchgeführt werden kann, so dass unabhängig von der Art der Federung für alle Fahrzeugachsen permanent aktualisierte, genaue Informationen über die Achslast zur Verfügung gestellt werden können. Dafür kann in Anlehnung an die bereits beschriebene Testroutine zur Ermittlung einer gemittelten Last-Weg-Kennlinie eines Wegsensors eine gemittelte Last-Druck-Kennlinie eines Drucksensors erzeugt und deren Werte abgespeichert werden. In einer solchen Last-Druck-Kennlinie einer luftgefederten Fahrzeugachse kann eine Hysterese in den Luftfederelementen berücksichtigt werden. Eine geeignete Testroutine kann beispielsweise in Anlehnung an eine aus der DE 10 2004 010 559 A1 bekannten Routine zur Ermittlung einer Achslastkennlinie eines luftgefederten Fahrzeugs erfolgen. Eine geeignete Achslastermittlungsroutine zur Ermittlung der Achslast an luftgefederten Fahrzeugachsen kann analog zu der bereits oben beschriebenen Achslastermittlungsroutine gemäß der Erfindung erfolgen.

Die Erfindung wird nachstehend anhand von einem in der beigefügten Zeichnung dargestellten Ausführungsbeispiel näher erläutert. In der Zeichnung zeigt
Fig. 1 eine schematisch vereinfacht dargestellte Niveauregulierungseinrichtung, welche zur Achslastermittlung und zur Niveauregelung an einem mit mechanisch und pneumatischen gefederten Achsen ausgestatteten Fahrzeug ausgebildet ist,
Fig. 2a ein Last-Weg-Diagramm eines Wegsensors gemäß Fig. 1 an einer mechanisch gefederten Fahrzeugachse mit einer Hysterese,
Fig. 2b eine andere Darstellung eines Last-Weg-Diagramms des Wegsensors gemäß Fig. 1 mit einer gemittelten Last-Weg-Kennlinie,
Fig. 3a ein Flussdiagramm eines Verfahrens gemäß der Erfindung zur Ermittlung einer Achslast an einer stahlgefederten Fahrzeugachse eines gemischtgefederten Fahrzeugs gemäß Fig. 1,
Fig. 3b eine erste Unterroutine eines Verfahrens gemäß Fig. 3a, und
Fig. 3c eine zweite Unterroutine eines Verfahrens gemäß Fig. 3a.

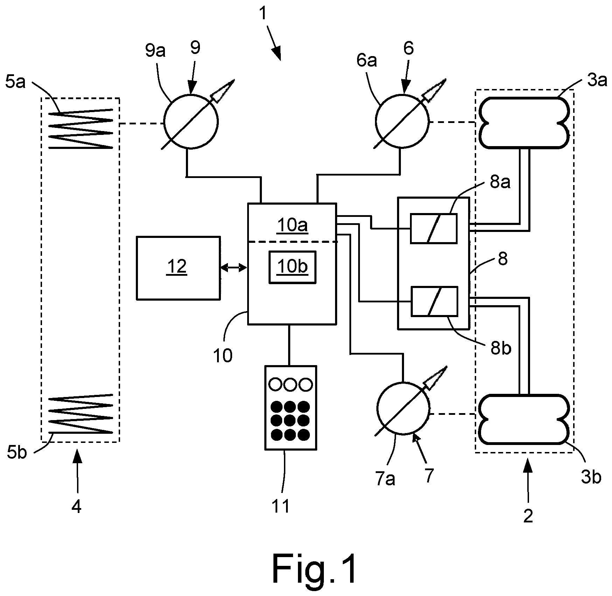

Eine in Fig. 1 vereinfacht dargestellte Niveauregulierungseinrichtung 1 eines Fahrzeugs, beispielsweise ein ECAS-System etwa eines Lastkraftwagens, weist zwei verstellbare, als Tragbälge ausgebildete Luftfederelemente 3a, 3b für eine federnde Abstützung eines nicht dargestellten Fahrzeugaufbaus gegenüber einer luftgefederten ersten Fahrzeugachse 2 auf. Eine mechanisch gefederte zweite Fahrzeugachse 4 ist hingegen über zwei Stahlfederelemente 5a, 5b gegenüberüber dem Fahrzeugaufbau abgestützt. Die Stahlfederelemente 5a, 5b sind in Fig. 1 lediglich symbolisch als Schraubendruckfedern angedeutet. Es kann sich dabei um Schraubendruckfedern oder um Blattfedern oder um aus mehreren einzelnen Federn zusammengesetzte Federpakete handeln. Die mechanische Federung kann also eine Schraubendruckfederung oder ein Blattfederung sein. Die Fahrzeugachsen 2, 4 können unabhängig von ihrer Federung jeweils als eine Vorderachse oder als eine Hinterachse ausgebildet sein. Der Lastkraftwagen gemäß Fig. 1 ist lediglich als ein Beispielfahrzeug zu verstehen. Die genannten Fahrzeugachsen 2, 4 können ebenso an einem Anhängefahrzeug oder an einem Sattelauflieger angeordnet sein.

Der pneumatisch/hydraulisch, hier vorliegend luftgefederten Fahrzeugachse 2 sind eine erste Wegmesseinrichtung 6 mit mindestens einem ersten Wegsensor 6a zur Erfassung von Weggrößen für eine Niveaubestimmung, eine Druckmesseinrichtung 7 mit mindestens einem Drucksensor 7a zur Erfassung von Druckwerten für eine Achslastermittlung an dieser Fahrzeugachse 2 sowie eine als Ventilkreis ausgebildete Steuerventileinrichtung 8 mit einem als Magnetventil ausgebildeten Steuerventil 8a, 8b je Luftfederelement 3a, 3b zugeordnet. Die Steuerventileinrichtung 8 ist mit den Luftfederelementen 3a, 3b schaltbar pneumatisch verbunden und weist einen nicht näher bezeichneten Druckluftanschluss auf. Der mechanisch, hier vorliegend stahlgefederten Fahrzeugachse 4 ist eine zweite Wegmesseinrichtung 9 mit mindestens einem zweiten Wegsensor 9a für eine Achslastermittlung an dieser Fahrzeugachse 4 zugeordnet.

Außerdem ist eine elektronische Steuereinheit 10 zur Auswertung der Wegmesswerte und der Druckmesswerte sowie zur Steuerung der Luftfederelemente 3a, 3b zur Einstellung eines Niveaus zwischen dem Fahrzeugaufbau und der luftgefederten Fahrzeugachse 2 angeordnet. Die elektronische Steuereinheit 10 weist eine elektrische Schnittstelle 10a auf, welche zum Empfang und zur Übertragung von Messsignalen von Sensoren ausgebildet ist. Außerdem weist die elektronische Steuereinheit 10 einen nichtflüchtigen Speicher 10b auf, in welchem die Werte mehrerer Kennlinien abgespeichert werden können. Zudem ist eine Bedieneinheit 11 für einen jeweiligen Bediener an die Steuereinheit 10 signaltechnisch angeschlossen. An der Bedieneinheit 11 kann der Bediener verschiedene Einstellungen vornehmen sowie Routinen und Kalibrierungen durchführen. Der Ventilkreis 8 und die zwei Wegmesseinrichtungen 6, 9 sowie die Druckmesseinrichtung 7 sind mit der Steuereinheit 10 ebenfalls signaltechnisch verbunden. Die Steuereinheit 10 weist einen CAN-Controller auf, über den die Steuereinheit 10 an einen CAN-Bus 12 angeschlossen ist. Der CAN-Controller steuert Unterbrechungsanforderungen und regelt den Datentransfer. Der Aufbau eines CAN-Busses in einem Fahrzeug sowie die Anbindung verschiedener Busteilnehmer an den CAN-Bus sind dem Fachmann bekannt.

Die ersten und zweiten Wegsensoren 6a, 9a sind am Fahrzeugaufbau jeweils in der Nähe ihrer zugeordneten Fahrzeugachse 2, 4 befestigt und über jeweils ein nicht dargestelltes Hebelsystem mit der Fahrzeugachse 2, 4 verbunden. Die Wegsensoren 6a, 9a weisen jeweils einen nicht dargestellten Drehwinkelsensor auf, welcher die jeweilige Winkelstellung des erwähnten Hebelsystems erfasst. Die Drehbewegung des Hebelsystems kann im Inneren des Wegsensors 6a, 9a in eine Linearbewegung umgesetzt werden, beispielsweise in Form des Eintauchens eines Ankers in eine Spule, wobei bei der Eintauchbewegung des ferromagnetischen Ankers in die feststehende Spule eine wegabhängige Phasenverschiebung zwischen Strom und Spannung entsteht, die als Ausgangssignal zur Verfügung gestellt wird, welches die Steuereinheit 10 erhält. Aus diesem Signal kann ein Istniveau des Abstands zwischen der jeweiligen Fahrzeugachse 2, 4 und dem Fahrzeugaufbau bestimmt werden. Der Wert des Istniveaus kann an der luftgefederten Fahrzeugachse 2 für eine Niveauregelung verwendet werden. Alternativ dazu können an beiden Fahrzeugachsen 2, 4 Wegsensoren angeordnet sein, die auf anderen Messprinzipien beruhen, um das Istniveaus zu erfassen.

Eine Niveauregelung einer Luftfederung mit einem solchen System ist an sich bekannt. Üblicherweise erfasst ein Wegsensor zur Niveauregelung in bestimmten Zeitabständen, beispielsweise alle 0,1 Sekunden, den Abstand zwischen der Fahrzeugachse und dem Fahrzeugaufbau. Der ermittelte Messwert ist der Istwert eines Regelkreises und wird an die Steuereinheit 10 weitergeleitet. In der Steuereinheit 10 wird dieser Istwert mit einem in der Steuereinheit 10 abgespeicherten Sollwert verglichen. Bei einer unzulässigen Differenz zwischen Istwert und Sollwert wird von der Steuereinheit 10 einem Magnetventil ein Stellsignal übermittelt. In Abhängigkeit von diesem Stellsignal steuert das Magnetventil nun den Tragbalg an und belüftet oder entlüftet diesen. Durch die Druckänderung im Tragbalg ändert sich auch der Abstand zwischen der Fahrzeugachse und dem Fahrzeugaufbau. Der Abstand wird erneut durch den zugehörigen Wegsensor gemessen und der Zyklus beginnt von vorn.

Eine Niveauregelung einer Luftfederung mit einem solchen System ist für die vorliegende Erfindung an sich nicht relevant und muss daher nicht weiter im Detail beschrieben werden. Ein Verfahren zur Achslastermittlung an einem gemischtgefederten Fahrzeug gemäß Fig. 1 ist in der eingangs erwähnten nicht vorveröffentlichten DE 10 2017 011 753 A1 bereits beschrieben worden. Die folgenden Ausführungen beschränken sich daher auf den Ablauf eines Verfahrens gemäß der Erfindung zur Ermittlung einer Achslast an der mechanisch gefederten Fahrzeugachse 4.

Demnach wird an der mechanisch gefederten Fahrzeugachse 4 der Wert des mit dem Wegsensor 9a erfassten Istniveaus zur Achslastermittlung verwendet. Die Achslastermittlung an der mechanisch gefederten Fahrzeugachse 4 macht sich dabei grundsätzlich den einfachen Zusammenhang zunutze, dass aus der Federkonstante des Federelements 5a, 5b und der gemessenen Einfederung diejenige Gewichtskraft ermittelt wird, welche auf der Fahrzeugachse 4 liegt. Allerdings unterliegt eine derartige mechanische Federung einer Hysterese, wie dies im Folgenden erläutert wird.

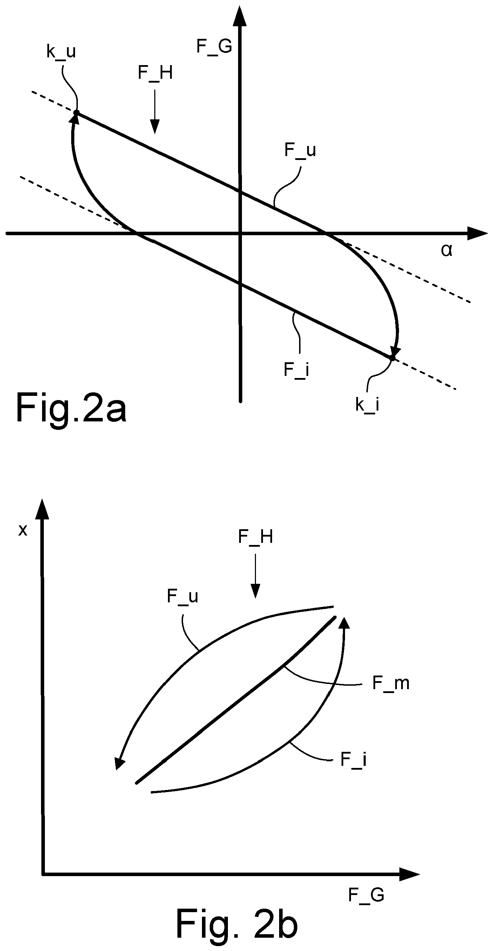

Fig. 2a zeigt beispielhaft eine solche Hysterese F_H einer Stahlfedereng einer mechanisch gefederten Fahrzeugachse 4. In dem Diagramm ist die auf der Fahrzeugachse 4 lastende Achslast F_G über die Hebelauslenkung α eines Hebels des zugehörigen Wegsensors 9a dargestellt. Die Hebelauslenkung α ist bei unbeladenem Fahrzeug am größten und verringert sich mit zunehmender Einfederung entsprechend zunehmender Achslast F_G. Die Hysterese F_H wird durch eine Beladungskurve F_i und eine Entladungskurve F_u beschrieben. Demnach beginnt ein Beladungsvorgang in einem unteren ersten Ladepunkt k_i, an dem lediglich das Eigengewicht des Fahrzeugs auf der Fahrzeugachse 4 lastet. Mit zunehmender Achslast F_G verläuft die Beladungskurve F_i zunächst linear, geht dann in einen progressiven Verlauf über und endet bei einer maximalen Achslast F_G in einem oberen zweiten Ladepunkt k_u. Ein Entladevorgang verläuft nicht auf derselben Kurve F_i zurück, sondern beschreibt die Entladungskurve F_u. Aufgrund von Reibungskräften in der mechanischen Federung bleibt beim Beladen des Fahrzeugs die Einfederung entlang des Federwegs hinter der zunehmenden Achslast F_G etwas zurück. Beim Entladen bleibt die Ausfederung hinter der abnehmenden Achslast F_G etwas zurück. Dadurch wird die in Fig. 2a dargestellte Hysterese F_H erzeugt.

Fig. 2b zeigt eine andere Darstellung der Hysterese F_H in einem Last-Weg-Diagramm des Wegsensors 9a. In dem Diagramm ist der Federweg x an der mechanisch gefederten Fahrzeugachse 4 über der Achslast F_G aufgetragen. Das Niveau des Fahrzeugs kann aus dem Federweg x abgeleitet werden und umgekehrt. In Fig. 2b dargestellt sind wiederum die Beladungskurve F_i, entlang welcher der Fahrzeugaufbau mit zunehmender Achslast F_G zunehmend einfedert, sowie die Entladungskurve F_u, entlang der der Fahrzeugaufbau mit abnehmender Achslast F_G zunehmend ausfedert. Aus den beiden zuletzt genannten Kurven F_i, F_u wird innerhalb einer nachfolgend beschriebenen Testroutine mittels eines in der Steuereinheit 10 abgespeicherten Algorithmus eine gemittelte Last-Weg-Kennlinie F_m berechnet. Im vorliegenden Beispiel verläuft die gemittelte Last-Weg-Kennlinie F_m annähernd linear.

Die Testroutine kann beispielsweise an einem Teststand mit einer stationären Gewichtserfassungsanlage durchgeführt werden. Das Fahrzeug wird dazu zum Aufnehmen eines Last-Weg-Diagramms an einer Fahrzeugachse, beispielsweise der Fahrzeugachse 4 gemäß Fig. 1, auf eine Achslastwaage gefahren, wobei die Räder der betreffenden Fahrzeugachse 4 jeweils auf einer Wägeplatte der Achslastwaage stehen. Nachdem zunächst das achsenspezifische Eigengewicht des Fahrzeugs, also die auf der Fahrzeugachse 4 liegende Last bei unbeladenem Fahrzeug erfasst wurde, wird stufenweise durch Auflegen von Gewichtsplatten bekannter Masse die Achslast erhöht bis die zulässige Achslast erreicht ist. Dazu wird jeweils die Einfederung mit dem zugehörigen Wegsensor 9a gemessen. Mittels einer Mehrzahl solcher Messwerte wird die Beladungskurve F_i bestimmt. Anschließend wird die Achslast solange verringert, bis das Fahrzeug vollständig entladen ist. Die dabei gewonnenen Wegmesswerte dienen zur Ermittlung der Entladungskurve F_u. Aufgrund der reibungsbedingten Widerstandskraft in den Federelementen 5a, 5b der Fahrzeugachse 4, welche bei einer Laständerung der Einfederung beziehungsweise der Ausfederung der Federelemente entgegenwirkt, ergibt sich eine Differenz zwischen der gemessenen Achslast und der tatsächlichen Achslast im Vergleich der beiden Kurven F_i und F_u. Die Beladungskurve F_i und die Entladungskurve F_u beschreiben daher eine Hysterese F_H im Last-Weg-Diagramm der Fahrzeugachse 4 gemäß Fig. 2a und Fig. 2b. In der durch den geschilderten Algorithmus errechneten gemittelten Last-Weg-Kennlinie F_m ist die Hysterese rechnerisch eliminiert. Die gemittelte Last-Weg-Kennlinie F_m wird dann von einer nachfolgend beschriebenen Achslastermittlungsroutine verwendet.

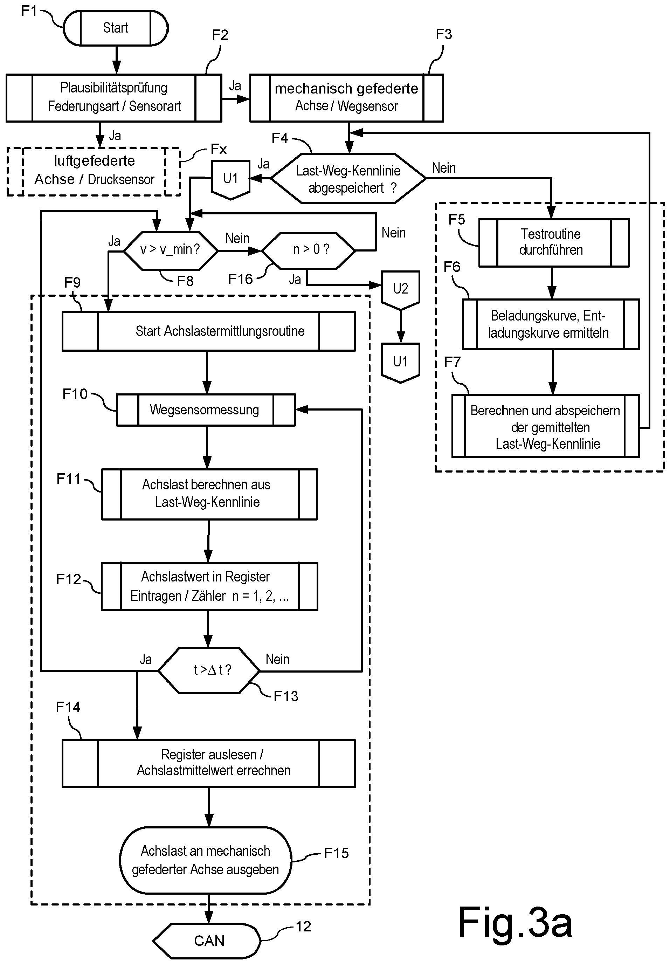

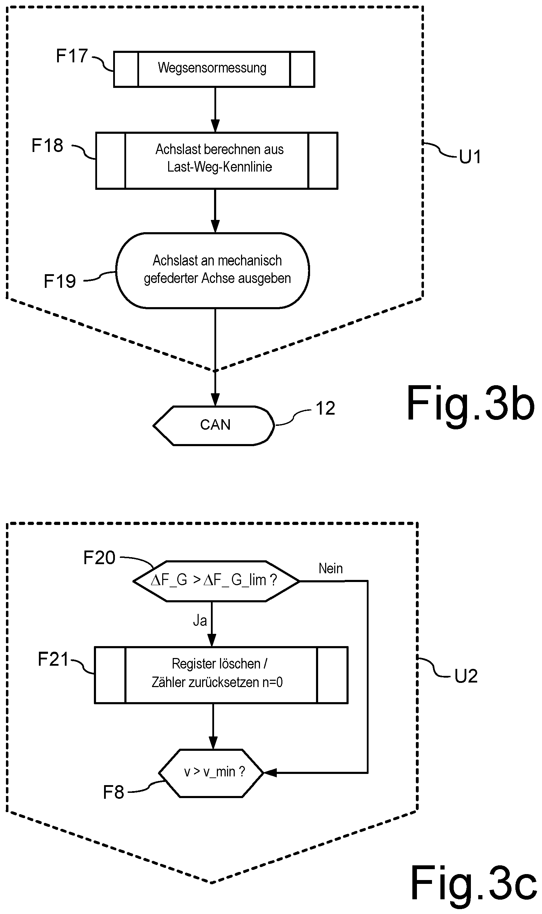

Fig. 3a, Fig. 3b und Fig. 3c zeigen ein Flussdiagramm mit Funktionsblöcken F1 bis F21 von Verfahrensschritten zur Ermittlung einer Achslast an der mechanisch gefederten Fahrzeugachse 4 gemäß Fig. 1. Demnach startet das Verfahren gemäß Fig. 3a mit der Aktivierung der Niveauregulierungseinrichtung 1, beispielsweise beim Einschalten einer Zündanlage des Fahrzeugs in einem ersten Funktionsblock F1. Im Falle eines gemischtgefederten Fahrzeugs wie im vorliegenden Beispiel gemäß Fig. 1 erfolgt zunächst in Funktionsblock F2 eine achsenspezifische Plausibilitätsprüfung, anhand der sich das Programm in zwei Programmzweige teilt. Eine achsenspezifische Plausibilitätsprüfung zur Erkennung der Art der Federung sowie ein Programmzweig zur Achslastermittlung an der luftgefederten Fahrzeugachse 2 sind an sich bereits in der erwähnten DE 10 2017 011 753 A1 beschrieben und hier nicht weiter dargestellt. In Fig. 3a ist die Erkennung einer luftgefederten Fahrzeugachse 2 lediglich durch einen Funktionsblock Fx angedeutet. Im Unterschied dazu wird hier ein neuer, zweiter Programmzweig gemäß der Erfindung vorgestellt, mit dem die Achslast an der mechanisch gefederten Fahrzeugachse 4 mit größerer Genauigkeit ermittelt wird. In einem rein mechanisch gefederten Fahrzeug kann dieser Programmzweig eine eigenständige Routine sein.

Wurde gemäß Fig. 3a mithilfe der Plausibilitätsprüfung in Funktionsblock F2 das Vorhandensein einer mechanisch gefederten Fahrzeugachse 4 sowie ein Wegsensorsignal des zugehörigen Wegsensors 9a erkannt und in Funktionsblock F3 festgelegt, so wird in Funktionsblock F4 das Vorhandensein einer in dem Speicher 10b der Steuereinheit 10 hinterlegten gemittelten Last-Weg-Kennlinie F_m für die Fahrzeugachse 4 gemäß Fig. 2b abgefragt. Liegt die Last-Weg-Kennlinie F_m noch nicht vor, so muss zunächst eine Testroutine wie bereits beschrieben durchgeführt werden. Die Testroutine startet in Funktionsblock F5. In Funktionsblock F6 werden die Beladungskurve F_I und die Entladungskurve F_u ermittelt. In Funktionsblock F7 wird daraus die benötigte Last-Weg-Kennlinie F_m errechnet und im Speicher 10b abgespeichert. Anschließend geht es von Funktionsblock F7 zurück zum Anfang des Funktionsblocks F4.

Sofern im Funktionsblock F4 eine Last-Weg-Kennlinie F_m festgestellt wurde, wird im Fahrzeugstillstand zunächst eine in Fig. 3b gezeigte erste Unterroutine U1 durchgeführt. Bei der Unterroutine U1 wird in Funktionsblock F17 gemäß Fig. 3b das Wegsensorsignal beziehungsweise die Auslenkung α des Wegsensors 9a gemäß Fig. 2a ausgelesen und daraus die jeweilige Einfederung beziehungsweise Ausfederung entlang des Federwegs x des Fahrzeugaufbaus bestimmt. In Funktionsblock F18 wird mittels der in dem Speicher 10b der Steuereinheit 10 abgespeicherten gemittelten Last-Weg-Kennlinie F_m, in der das gemessene Istniveau beziehungsweise der Federweg mit der Achslast in Abhängigkeit gebracht ist, ein aktueller Achslastwert an der mechanisch gefederten Fahrzeugachse 4 ermittelt. Dieser Achslastwert wird in Funktionsblock F19 als aktuelle Achslast F_G an der mechanisch gefederten Fahrzeugachse F4 ausgegeben und auf dem CAN-Bus 12 gesendet.

Die Unterroutine U1 dient für eine, jederzeit abrufbare Basisanzeige der Achslast beziehungsweise eines daraus ableitbaren Gesamtgewichts Fahrzeugs. Dem Fahrer steht dadurch insbesondere schon vor Antritt der Fahrt beim Beladen oder Entladen des Fahrzeugs eine Achslastinformation beziehungsweise eine Gewichtsinformation zur Verfügung. Da davon ausgegangen werden kann, dass im Fahrzeugstillstand in den Federelementen 5a, 5b, welche beispielsweise als Blattfederpakete ausgebildet sein können, mögliche Verspannungen aufgetreten sind, die sich nicht gelöst haben, kann allerdings die Genauigkeit der angezeigten Achslastinformation im Vergleich mit der Achslastinformation, welche durch eine nachfolgend beschriebene Achslastermittlungsroutine erzielt wird, geringer sein. Insofern handelt es sich bei dieser Unterroutine U1 um eine Hilfsroutine des eigentlichen Verfahrens. Die auf diese Weise ermittelte aktuelle Achslastinformation wird daher mit einem entsprechenden Hinweis dem Fahrer angezeigt.

Nach der durchlaufenen Unterroutine U1 mit der Erzeugung der eingeschränkt genauen Basis-Achslastanzeige wird im Funktionsblock F8 die Fahrgeschwindigkeit v des Fahrzeugs ermittelt. Ist die Fahrt gestartet und hat die Fahrgeschwindigkeit v eine unter Grenze v_min, beispielsweise 2 km/h, überschritten, startet im Funktionsblock F9 eine Achslastermittlungsroutine.

Im Funktionsblock F10 wird das Wegsensorsignal beziehungsweise die Auslenkung α des Wegsensors 9a gemäß Fig. 2a ermittelt und daraus die jeweilige Einfederung beziehungsweise Ausfederung entlang des Federwegs x des Fahrzeugaufbaus bestimmt. Im Funktionsblock F11 wird mittels der in dem Speicher 10b der Steuereinheit 10 abgespeicherten gemittelten Last-Weg-Kennlinie F_m, in der das gemessene Istniveau beziehungsweise der Federweg mit der Achslast in Bezug zueinander gesetzt sind, ein aktueller Achslastwert an der mechanisch gefederten Fahrzeugachse 4 ermittelt, in einem flüchtigen Registerspeicher in Funktionsblock F12 registriert sowie mit einer Zählnummer n eines Registerzählers versehen.

Innerhalb einer im Funktionsblock F13 festgelegten Zeitspanne Δt werden gemäß der Funktionsblöcke F10 bis F12 fortlaufend neue Achslastwerte ermittelt und registriert. Hierbei werden Achslastwerte, welche während einer Kurvenfahrt gemessen werden, nicht in das Register eingetragen. Dazu wird die Querbeschleunigung des Fahrzeugs mithilfe eines vorhandenen Querbeschleunigungssensors ständig gemessen und Achslastwerte bei Querbeschleunigungen oberhalb eines vorgegebenen Grenzwertes, beispielsweise 0,3 m/s², gezielt nicht verwendet. Nach Ablauf der vorbestimmten Zeitspanne Δt, beispielsweise 10 Minuten, wird im Funktionsblock F14 das arithmetische Mittel der registrierten Achslastwerte gebildet und der sich daraus ergebende Achslastwert abgespeichert.

Dieser Mittelwert wird im Funktionsblock F15 als aktuelle Achslast F_G an der mechanisch gefederten Fahrzeugachse F4 ausgegeben und auf dem CAN-Bus 12 gesendet. Gleichzeitig wird die Achslastermittlungsroutine über die Fahrgeschwindigkeitsabfrage im Funktionsblock F8 erneut gestartet und zyklisch wiederholt, so dass während der Fahrt vorliegend alle 10 Minuten eine neue aktuelle Achslastinformation zur Verfügung steht. Alte Achslastinformationen werden jeweils überschrieben. Die Achslastinformation zu der mechanisch gefederten Fahrzeugachse 4 kann dem Fahrer auf einem Display angezeigt und/oder von anderen elektronischen Regelsystemen genutzt werden. Dementsprechend kann an beliebig vielen mechanisch gefederten Fahrzeugachsen eine genaue achsenspezifische Achslastinformation erzeugt und angezeigt sowie aus der Anzahl der Fahrzeugachsen beziehungsweise aus der Summe der Achslasten das Gesamtgewicht des Fahrzeugs mit hoher Genauigkeit ermittelt werden.

Hat die Fahrgeschwindigkeit v in Funktionsblock F8 die Fahrgeschwindigkeitsuntergrenze v_min noch nicht überschritten oder befindet sich das Fahrzeug nach der Fahrt wieder im Stillstand, so wird in Funktionsblock F16 die aktuelle Zählnummer n abgefragt. Der Registerzähler des flüchtigen Registerspeichers ist beim Einschalten der Zündanlage stets auf den Wert Null zurückgesetzt und wird erst durch die Achslastermittlungsroutine nach dem Beginn der Fahrt erhöht. Wird in Funktionsblock F16 eine höhere Zählnummer n > 0 registriert, so wurde die Achslastermittlungsroutine während der Fahrt mindestens einmal durchlaufen. Ergibt die Geschwindigkeitsabfrage in Funktionsblock F8, dass die Fahrgeschwindigkeitsuntergrenze v_min nicht überschritten ist und ergibt die Zählerabfrage in Funktionsblock F16, dass die Achslastermittlungsroutine bereits durchgeführt wurde, so ist das Fahrzeug demnach nach Fahrtantritt zum Stillstand gekommen. Die Zählerabfrage in Funktionsblock F8 verzweigt sich in diesem Fall zu einer in Fig. 3c dargestellten zweiten Unterroutine U2.

In der Unterroutine U2 wird in Funktionsblock F20 eine Laständerung ΔF_G abgefragt. Wird eine Achslaständerung ΔF_G von mehr als einem vorgegebenen Achslaständerungsgrenzwert ΔF_G_lim, beispielsweise 10%, erkannt, so wird in Funktionsblock F21 das Register gelöscht beziehungsweise der Zähler auf den Wert Null zurückgesetzt. Die aktuell angezeigte Achslast F_G ist aufgrund der Laständerung nicht mehr gültig. Um einen neuen aktuellen Achslastwert mithilfe der Achslastroutine zu erzeugen, springt der Verfahrensablauf daher erneut auf die Geschwindigkeitsabfrage in Funktionsblock F8 zurück. Bis das Fahrzeug die Fahrt wieder aufgenommen hat und ein neuer Achslastwert ermittelt ist, kann hilfsweise mittels der ersten Unterroutine U1 gemäß Fig. 3b, wie bereits beschrieben, eine Achslastinformation mit eingeschränkter Genauigkeit erzeugt und dem Fahrer angezeigt werden. Ist das Fahrzeug zum Stillstand gekommen, die Last beziehungsweise die Beladung des Fahrzeugs ändert sich jedoch nicht oder eine Laständerung bleibt unterhalb des Achslaständerungsgrenzwertes ΔF_G_lim, so kann die aktuelle angezeigte Achslastanzeige beibehalten werden, bis während der Fahrt ein neuer Achslastwert ermittelt ist.

Zusammenfassend kann also festgestellt werden, dass dem Fahrer während der Fahrt stets mithilfe der gemittelten Last-Weg-Kennlinie F_m, welche Fehler bei der Achslastermittlung aufgrund der Beladungs-Entladungs-Hysterese eliminiert, und mithilfe des erzeugten gemittelten Achslastwertes, welcher Fehler bei der Achslastermittlung aufgrund von im Fahrzeugstillstand vorhandenen Federverspannungen eliminiert, eine sehr genaue aktuelle Achslastinformation zur Verfügung steht. Während des Fahrzeugstillstands steht dem Fahrer zumindest eine Achslastinformation mit zwar einer etwas geringeren aber durch die gemittelte Last-Weg-Kennlinie F_m immer noch guten Genauigkeit zur Verfügung.

### Bezugszeichenliste (Teil der Beschreibung)

- 1: Niveauregulierungseinrichtung
- 2: Pneumatisch/hydraulisch gefederte Fahrzeugachse
- 3a: Erstes Luftfederelement
- 3b: Zweites Luftfederelement
- 4: Mechanisch gefederte Fahrzeugachse
- 5a: Erstes Stahlfederelement
- 5b: Zweites Stahlfederelement
- 6: Erste Wegmesseinrichtung
- 6a: Wegsensor der ersten Wegmesseinrichtung
- 7: Druckmesseinrichtung
- 7a: Drucksensor der Druckmesseinrichtung
- 8: Steuerventileinrichtung, Ventilkreis
- 8a: Erstes Steuerventil des Ventilkreises
- 8b: Zweites Steuerventil des Ventilkreises
- 9: Zweite Wegmesseinrichtung
- 9a: Wegsensor der der zweiten Wegmesseinrichtung
- 10: Elektronische Steuereinheit
- 10a: Elektrische Schnittstelle der Steuereinheit
- 10b: Nichtflüchtiger Speicher der Steuereinheit
- 11: Bedieneinheit der Steuereinheit
- 12: CAN-Bus
- α: Hebelauslenkung des Wegsensors 9a
- F_G: Achslast
- ΔF_G: Achslaständerung
- ΔF_G_lim: Achslaständerungsgrenzwert
- F_H: Hysterese
- F_i: Beladungskurve
- F_m: Gemittelte Last-Weg-Kennlinie
- F_u: Entladungskurve
- k_i: Unterer Ladepunkt
- k_u: Oberer Ladepunkt
- t: Zeit
- Δt: Zeitspanne
- v: Fahrgeschwindigkeit
- v_min: Fahrgeschwindigkeitsuntergrenze
- x: Federweg
- F1 - F21: Funktionsblöcke eines Steuerungsverfahrens
- Fx: Funktionsblock Achslastbestimmung an luftgefederter Fahrzeugachse
- U1: Erste Unterroutine
- U2: Zweite Unterroutine

## Patentansprüche

1. Verfahren zur Ermittlung einer Achslast an einem mechanisch gefederten Fahrzeug mittels einer Wegmesseinrichtung (9), einer elektronischen Steuereinheit (10) und eines in der Steuereinheit (10) abgespeicherten Algorithmus, wobei vorab hinsichtlich der mechanisch gefederten Fahrzeugachse (4) eine Testroutine durchgeführt wird, bei der ein Niveausignal einer an der Fahrzeugachse (4) angeordneten Wegmesseinrichtung (9) erfasst und ausgewertet wird, wobei bei einem Ladevorgang des Fahrzeugs aus einer Mehrzahl von Messwerten eine Beladungskurve (F_i) ermittelt wird, welche das mit der Wegmesseinrichtung (9) gemessene Niveau oder eine mit dem Niveau korrelierte andere Messgröße in Abhängigkeit von der zunehmenden Achslast angibt, und wobei bei einem Entladevorgang des Fahrzeugs aus einer Mehrzahl von Messwerten eine Entladungskurve (F_u) ermittelt wird, welche das mit der Wegmesseinrichtung (9) gemessene Niveau oder eine mit dem Niveau korrelierte andere Messgröße in Abhängigkeit von der abnehmenden Achslast angibt, und bei dem aus den Werten der Beladungskurve (F_i) sowie der Entladungskurve (F_u) eine gemittelte Last-Weg-Kennlinie (F_m) errechnet wird, deren Werte in einem nichtflüchtigen Speicher (10b) der Steuereinheit (10) abgespeichert werden,
**dadurch gekennzeichnet, dass** nach jedem Start des Fahrzeugs nach Überschreiten einer vorgegebenen unteren Fahrgeschwindigkeitsgrenze (v_min) eine sich während der Fahrt zyklisch wiederholende Achslastermittlungsroutine durchgeführt wird, bei der jeweils während einer vorgegebenen Zeitspanne (Δt) fortlaufend Achslastwerte mit der gemittelten Last-Weg-Kennlinie (F_m) ermittelt werden, sowie aus den während der Zeitspanne (Δt) ermittelten Achslastwerten ein arithmetischer Achslastmittelwert errechnet und dieser Achslastmittelwert als aktueller Achslastwert angezeigt wird, wobei dieser Achslastwert bis zum Überschreiben durch einen neuen Achslastwert gültig bleibt, wobei Achslastwerte, welche während der Dauer einer Kurvenfahrt oder bei einem anderen Querbeschleunigungen des Fahrzeugaufbaus verursachenden Fahrmanöver ermittelt werden, bei der Errechnung des Achslastmittelwerts unberücksichtigt bleiben, wobei zur Erkennung einer Kurvenfahrt oder eines anderen Querbeschleunigungen des Fahrzeugaufbaus verursachenden Fahrmanövers des Fahrzeugs, mittels eines Querbeschleunigungssensors fortlaufend ein Querbeschleunigungssignal erfasst und ausgewertet wird, wobei auf eine Kurvenfahrt oder ein gleichwirkendes Fahrmanöver des Fahrzeugs geschlossen wird, wenn der Betrag des Querbeschleunigungssignals einen vorgegebenen Querbeschleunigungsgrenzwert überschreitet.

2. Verfahren nach Anspruch 1, **dadurch gekennzeichnet, dass** im Fahrzeugstillstand die Achslastermittlungsroutine neu gestartet wird, wenn eine Achslaständerung (ΔF_G) erkannt wird, welche einen vorgegebenen Achslaständerungsgrenzwert (ΔF_G_lim) überschreitet.

3. Verfahren nach einem der Ansprüche 1 und 2, **dadurch gekennzeichnet, dass** die Testroutine zur Errechnung einer gemittelten Last-Weg-Kennlinie (F_m) durch einen Bediener mithilfe von Eingabe- und Anzeigemitteln manuell durchgeführt sowie nach einer angezeigten Aufforderung in vorgebbaren zeitlichen und/oder betriebsstundenabhängigen Abständen wiederholt werden kann.

4. Verfahren nach einem der Ansprüche 1 bis 3, **dadurch gekennzeichnet, dass** die Testroutine zur Ermittlung einer gemittelten Last-Weg-Kennlinie (F_m) für jede mechanisch gefederte Fahrzeugachse (4) des Fahrzeugs individuell durchgeführt wird.

5. Verfahren nach einem der Ansprüche 1 bis 4, **dadurch gekennzeichnet, dass** die Achslastermittlungsroutine zur Ermittlung der Achslast für jede mechanisch gefederte Fahrzeugachse (4) des Fahrzeugs, welche mit einer ein Niveausignal erzeugenden Wegmesseinrichtung (9) ausgestattet ist, individuell durchgeführt wird.

## Claims

1. Method for determining an axle load on a mechanically suspended vehicle by means of a displacement measuring device (9), an electronic control unit (10) and an algorithm stored in the control unit (10), a test routine being performed in advance with regard to the mechanically suspended vehicle axle (4), in which routine a level signal of a displacement measuring device (9) arranged on the vehicle axle (4) is detected and evaluated, a load curve (F_i) being determined during a charging process of the vehicle from a plurality of measured values, which load curve specifies the level measured by the displacement measuring device (9) or a different measured variable correlated with the level depending on the increasing axle load, and a discharge curve (F_u) being determined during a discharging process of the vehicle from a plurality of measured values, which discharge curve specifies the level measured by the displacement measuring device (9) or a different measured variable correlated with the level depending on the decreasing axle load, and in which an averaged load-displacement characteristic (F_m) is calculated from the values of the loading curve (F_i) and the discharge curve (F_u), the values of which are stored in a non-volatile memory (10b) of the control unit (10), **characterized in that** after each start of the vehicle, after a predetermined lower driving-speed limit (v_min) has been exceeded, an axle load determination routine which repeats cyclically during the trip is performed, in which routine axle load values are continuously determined using the averaged load-displacement characteristic (F_m) in each case during a predetermined period of time (Δt), and an arithmetical axle load mean value is calculated from the axle load values determined during the period of time (Δt), and this axle load mean value is displayed as the current axle load value, this axle load value remaining valid until being overwritten by a new axle load value, axle load values which are determined during the duration of a cornering maneuver or in the case of a driving maneuver that causes different transverse accelerations of the vehicle body not being taken into account when calculating the axle load mean value, a transverse acceleration signal being continuously detected and evaluated by means of a transverse acceleration sensor in order to detect a cornering maneuver or a different driving maneuver of the vehicle that causes different transverse accelerations of the vehicle body, a cornering maneuver or a driving maneuver of the vehicle having the same effect being indicated if the value of the transverse acceleration signal exceeds a predefined transverse acceleration limit value.

2. Method according to claim 1, **characterized in that,** during the vehicle standstill, the axle load determination routine is restarted if an axle load change (ΔF_G) is detected which exceeds a predetermined axle load change limit value (ΔF_G_lim).

3. Method according to any of claims 1 and 2, **characterized in that** the test routine for calculating an averaged load-displacement characteristic (F_m) is performed manually by an operator using input and display means, and can be repeated in accordance with a displayed request at predeterminable temporal and/or operating-hour-dependent intervals.

4. Method according to any of claims 1 to 3, **characterized in that** the test routine for determining an averaged load-displacement characteristic (F_m) is performed individually for each mechanically suspended vehicle axle (4) of the vehicle.

5. Method according to any of claims 1 to 4, **characterized in that** the axle load determination routine for determining the axle load is performed individually for each mechanically suspended vehicle axle (4) of the vehicle, which is fitted with a displacement measuring device (9) generating a level signal.

## Revendications

1. Procédé permettant la détermination d'une charge d'essieu sur un véhicule à suspension mécanique à l'aide d'un dispositif de mesure de déplacement (9), d'une unité de commande (10) électronique et d'un algorithme enregistré dans l'unité de commande (10), une routine de test étant exécutée au préalable en ce qui concerne l'essieu (4) de véhicule à suspension mécanique, lors de laquelle un signal de niveau d'un dispositif de mesure de déplacement (9) disposé sur l'essieu de véhicule (4) est détecté et évalué, lors d'un processus de chargement du véhicule, une courbe de chargement (F_i) étant déterminée à partir d'une pluralité de valeurs de mesure, laquelle courbe de chargement indique le niveau mesuré par le dispositif de mesure de déplacement (9) ou une autre grandeur de mesure corrélée au niveau en fonction de la charge d'essieu croissante, et, lors d'un processus de déchargement du véhicule, une courbe de déchargement (F_u) étant déterminée à partir d'une pluralité de valeurs de mesure, laquelle courbe de déchargement indique le niveau mesuré à l'aide du dispositif de mesure de déplacement (9) ou une autre grandeur de mesure corrélée au niveau en fonction de la charge d'essieu décroissante, et dans lequel, à partir des valeurs de la courbe de chargement (F_i) ainsi que de la courbe de déchargement (F_u), une ligne caractéristique charge/déplacement moyenne (F_m) est calculée, dont les valeurs sont enregistrées dans une mémoire non volatile (10b) de l'unité de commande (10), **caractérisé en ce que**, après chaque démarrage du véhicule, après le dépassement d'une limite de vitesse de déplacement inférieure prédéfinie (v_min), une routine de détermination de charge d'essieu se répétant de manière cyclique pendant la conduite est exécutée, lors de laquelle routine des valeurs de charge d'essieu sont déterminées en continu à l'aide de la ligne caractéristique charge/déplacement moyenne (F_m) respectivement pendant un intervalle de temps (Δt) prédéfini, et une valeur moyenne de charge d'essieu arithmétique est calculée à partir des valeurs de charge d'essieu déterminées pendant l'intervalle de temps (Δt) et ladite valeur moyenne de charge d'essieu est affichée comme valeur de charge d'essieu actuelle, ladite valeur de charge d'essieu restant valable jusqu'à ce qu'elle soit remplacée par une nouvelle valeur de charge d'essieu, les valeurs de charge d'essieu, lesquelles sont déterminées pendant la durée d'un virage ou lors d'une autre manoeuvre de conduite provoquant des accélérations transversales de la carrosserie de véhicule, n'étant pas prises en compte lors du calcul de la valeur moyenne de charge d'essieu, pour reconnaître un virage ou une autre manoeuvre de conduite du véhicule provoquant des accélérations transversales de la carrosserie de véhicule, un signal d'accélération transversale étant détecté et évalué en continu à l'aide d'un capteur d'accélération transversale, un virage ou une manoeuvre de conduite du véhicule ayant le même effet étant conclu lorsque la valeur du signal d'accélération transversale dépasse une valeur limite d'accélération transversale prédéfinie.

2. Procédé selon la revendication 1, **caractérisé en ce que,** lorsque le véhicule est à l'arrêt, la routine de détermination de charge d'essieu est redémarrée lorsqu'une variation de charge d'essieu (ΔF_G) est détectée, laquelle variation de charge d'essieu dépasse une valeur limite de variation de charge d'essieu prédéfinie (ΔF_G_lim).

3. Procédé selon l'une des revendications 1 et 2, **caractérisé en ce que** la routine de test pour le calcul d'une ligne caractéristique charge/déplacement moyenne (F_m) peut être exécutée manuellement par un opérateur à l'aide de moyens d'entrée et d'affichage et peut être répétée après une invitation affichée à des intervalles de temps pouvant être prédéfinis et/ou dépendant des heures de fonctionnement.

4. Procédé selon l'une des revendications 1 à 3, **caractérisé en ce que** la routine de test pour la détermination d'une ligne caractéristique charge/déplacement moyenne (F_m) est exécutée individuellement pour chaque essieu de véhicule (4) du véhicule à suspension mécanique.

5. Procédé selon l'une des revendications 1 à 4, **caractérisé en ce que** la routine de détermination de charge d'essieu pour la détermination de la charge d'essieu est exécutée individuellement pour chaque essieu de véhicule (4) du véhicule à suspension mécanique équipé d'un dispositif de mesure de déplacement (9) générant un signal de niveau.
